# EUROPÄISCHE PATENTSCHRIFT

(11) **EP 2 498 014 B1**
(45) Veröffentlichungstag und Bekanntmachung des Hinweises auf die Patenterteilung: **27.05.2015**
(21) Anmeldenummer: 12001261.2
(22) Anmeldetag: 25.02.2012
(51) Int. Cl.: F24F 11/02, F24F 12/00

(54) **Wärmerückgewinnungsmodul**
Heat recovery module
Module de récupération de la chaleur

(30) Priorität: 11.03.2011 DE 102011013940
(43) Veröffentlichungstag der Anmeldung: 12.09.2012
(73) Patentinhaber: Vaillant GmbH, 42859 Remscheid (DE)
(72) Erfinder: Kämpchen, Marian, 42699 Solingen (DE)
(74) Vertreter: Hocker, Thomas

(56) Entgegenhaltungen:
- WO-A2-2004/016457
- CZ-B6- 296 667
- DE-A1-102008 038 938

## Beschreibung

Die Erfindung betrifft ein Wärmerückgewinnungsmodul, vorzugsweise ein Wärmerückgewinnungsmodul für eine kontrollierte Wohnraumlüftung. Bei einer kontrollierten Wohnraumlüftung, wie sie aus der Patentschrift AT 402 666 B bekannt ist, wird verbrauchte Luft aus dem Wohnraum abgesaugt und nach außen abgeführt und zeitgleich Außenluft dem Wohnraum zugeführt. Dabei wird mittels eines Wärmerückgewinnungsmoduls die Wärme der Abluft auf die zugeführte Außenluft (Zuluft) übertragen. Dieser kann beispielsweise auf einem Platten-Wärmeübertrager basieren, durch den die Luftströme geleitet werden. Der Vorteil des Wärmerückgewinnungsmoduls ist, dass die Wärme der Raumluft nicht oder nur teilweise verloren geht, wodurch gegenüber einer freien Lüftung mittels eines geöffneten Fensters im Winter Heizkosten gespart werden können.

Dies ist im Sommer jedoch ein Nachteil, da die Wohnraumtemperaturen oberhalb der Behaglichkeitsgrenze liegen können und die Rückführung der Raumluftwärme unerwünscht ist. Dies trifft besonders dann zu, wenn die Außenluft zuvor durch einen Erdwärmeübertrager geführt wurde. Daher weisen gattungsgemäße Wärmerückgewinnungsmodule Bypass-Luftführungen auf, die es zumindest einem der Luftströme ermöglichen, bei Bedarf den Wärmeübertrager zu umgehen. Hierzu werden Schließer verwendet, mit denen sich ein Luftstrom abriegeln lässt.

Die Offenlegungsschrift DE 10 2008 038 938 A1 zeigt ein Wärmerückgewinnungsmodul gemäß dem Oberbegriff des Anspruchs 1.

Aus der Offenlegungsschrift DE 10 2007 008 512 A1 ist ebenfalls ein gattungsgemäßes Wärmerückgewinnungsmodul mit Bypass bekannt, bei dem als Schließer eine kombinierte Klappe mit Schieber verwendet wird. Auch hier ergibt sich das Problem, dass für den Bewegungsraum der Platte ein großer Bauraum benötigt wird.

Die derzeit verfügbaren Wärmerückgewinnungsmodule weisen demnach entweder eine problematische Abdichtung oder einen großen Bauraum auf, der einen entsprechend großen Installationsraum in einem Wohngebäude benötigt.

Es ist daher Aufgabe der Erfindung, ein kompaktes Wärmerückgewinnungsmodul mit Bypass mit zuverlässig abdichtenden Schließern für Bypass und/oder Wärmeübertrager bereitzustellen.

Diese Aufgabe wird gemäß den Merkmalen des Anspruchs 1 dadurch gelöst, dass als Schließer eine Rollblende verwendet wird. Der Vorteil der Rollblende ist, dass sie Platz sparend und mit wenigen Dichtflächen und zugleich kostengünstig ausgeführt werden kann.

Vorteilhafte Ausgestaltungen ergeben sich durch die Merkmale der abhängigen Ansprüche.

In einer Ausführungsvariante der Erfindung wird als Rollblende eine in einer Achse biegeweiche Folie verwendet. Dies kann beispielsweise eine Kunststoff- oder Metallfolie sein, die zur Erhöhung der Biegesteifigkeit um die Achse quer zur Aufrollachse gerippt oder gewellt sein kann.

In einer anderen Ausführungsvariante der Erfindung wird die Rollblende durch ein Rollladen gebildet, der aus mehreren gelenkig miteinander verbundenen Lamellen aufgebaut ist.

Besonders bevorzugt ist das Wärmerückgewinnungsmodul so aufgebaut, dass die zu einer Rolle aufgerollte Rollblende ebenfalls einen abzusperrenden Luftstrom sperrt. Der besondere Vorteil ist, dass ein Luftstrom nun wechselseitig gesperrt werden kann. Bei geschlossener Blende wird ein Luftstrom gesperrt, während bei geöffneter Blende durch die aufgewickelte Rolle ein anderer Luftstrom gesperrt wird. Ein weiterer besonderer Vorteil ist, dass gleichzeitig eine Zwangsverriegelung der beiden Funktionen vorliegt, das heißt es können nicht gleichzeitig beide Luftströme gesperrt werden.

In vorteilhafter Weise ist die Rollblende so angeordnet, dass im abgerollten Zustand der Rollblende der Luftstrom durch den Wärmeübertrager von der Rollblende verschlossen wird. Der Bypass-Luftstrom hingegen wird bei aufgerolltem Zustand der Rollblende durch die Rolle selbst verschlossen. Dies hat den Vorteil, dass der relativ schmale Querschnitt, der durch die abgerollten Rolle freigegeben wird, im Bypass einen etwas höheren Strömungswiderstand hervorruft, so dass der nun nicht mehr vorhandene Strömungswiderstand des im Bypass nicht durchströmten Wärmeübertragers ersetzt wird.

In einer Weiterbildung der Erfindung weist das Wärmerückgewinnungsmodul Dichtungen auf, die an der Rolle im aufgewickelten Zustand anliegen. Im einfachsten Fall erfolgt dies dadurch, dass der Durchmesser der Rolle beim Aufrollen der Rollblende immer größer wird, bis die Rolle an den Dichtungen anliegt.

Vorzugsweise erfolgt dies alternativ dadurch, dass die Dichtungen elastisch sind und durch die Luftdruckdifferenz, die auf dem Bypass-Weg im gesperrten Zustand herrscht an die Rolle angelegt werden.

Ebenfalls vorzugsweise wird ein Aktor eingesetzt, der aktiv die Dichtungen von der Rolle abhebt beziehungsweise die Dichtungen an die Rolle anlegt.

In einer Variante sind der Wärmeübertrager und die Rollblende zusammen mit anderen Vorrichtungselementen in einem gemeinsamen Gehäuse untergebracht. Dies hat den Vorteil, dass das Wärmerückgewinnungsmodul als ein einzelnes Bauteil gehandhabt werden kann.

In einer anderen Variante sind der Wärmeübertrager und die Rollblende in getrennten Gehäusen vorgesehen. Dies hat den Vorteil, dass auf einfache Weise und mit gleichen Bauteilen Varianten des Wärmerückgewinnungsmoduls mit oder ohne Bypass bereit gestellt werden können. Ebenso kann ein Wärmerückgewinnungsmodul ohne Bypass so leicht mit einem Bypass nachgerüstet werden. Das Gehäuse, das die Rollblende enthält, kann entweder direkt an das andere Gehäuse angeflanscht werden oder über Rohrverbindungen verbunden werden.

Die Erfindung wird nun anhand der Figuren detailliert erläutert.

Es stellen dar:
Figur 1: ein erfindungsgemäßes Wärmerückgewinnungsmodul mit geschlossenem Bypass
Figur 2: das Wärmerückgewinnungsmodul aus Figur 1 mit geöffnetem Bypass
Figur 3 bis 4: die Detailansicht von alternativen Ausführungen des Wärmerückgewinnungsmoduls aus Figur 1.

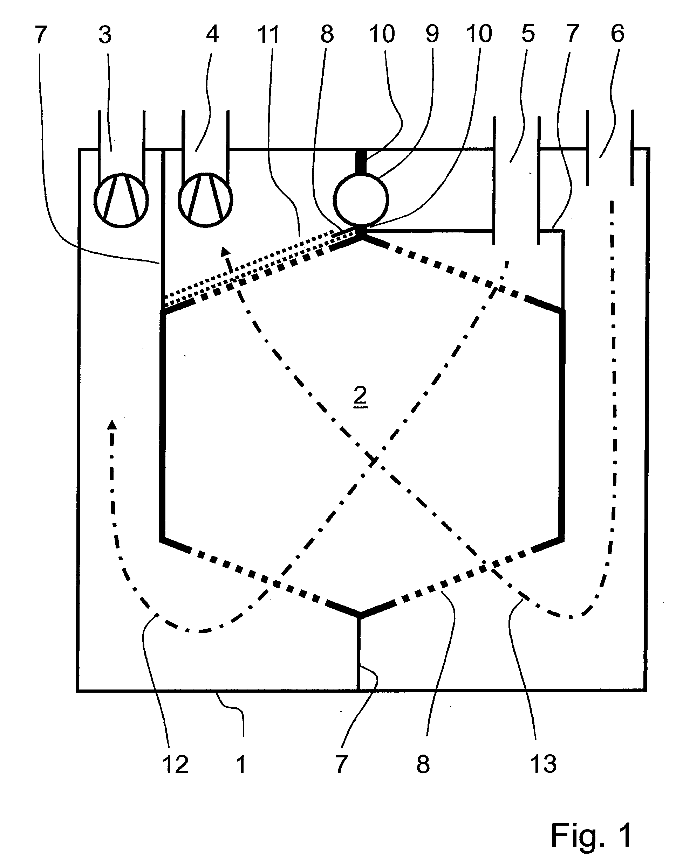

Figur 1 zeigt ein erfindungsgemäßes Wärmerückgewinnungsmodul. Das Wärmerückgewinnungsmodul dient der Rückgewinnung von Wärme bei einer kontrollierten Lüftungsanlage. Eine derartige Lüftungsanlage wird in Wohnräumen eingesetzt. Dabei wird verbrauchte Abluft aus den Räumen gefördert, im Wärmeübertrager abgekühlt und als Fortluft in die Umgebung geblasen. Zugleich wird Außenluft angesogen, im Wärmeübertrager erwärmt und als Zuluft den Räumen zugeführt. Das Wärmerückgewinnungsmodul dient dazu, die Wärme der Abluft an die Zuluft zu übertragen. Hierzu weist das Wärmerückgewinnungsmodul einen von einem Gehäuse 1 umschlossenen Wärmeübertrager 2 auf, der sich in diesem Ausführungsbeispiel über die gesamte Tiefe des Wärmerückgewinnungsmoduls erstreckt. Darüber hinaus bilden die Wandung des Wärmeübertragers 2 zusammen mit der Innenwand des Gehäuses 1 und mit Trennwänden 7 Luftkanäle, durch die die Luftströmungen geführt werden. Über einen Abluft-Anschluss 5 wird verbrauchte Raumluft angesaugt, diagonal durch den Wärmeübertrager 2 gefördert und mittels eines Gebläses am Fortluft-Anschluss nach außen geblasen. Die Luftströmung folgt dabei dem Luftstrom 12. Zugleich wird von außen über einen Außenluft-Anschluss 6 Frischluft von außen entweder direkt oder über einen Erdwärmeübertrager zugeführt, ebenfalls durch den Wärmeübertrager 2 geleitet und mittels eines Gebläses am Zuluft-Anschluss 4 in die Wohnräume geblasen. Diese Luftströmung folgt dabei dem Luftstrom 13. Bei dem Wärmeübertrager 2 handelt es sich in der Regel um einen Plattenwärmeübertrager. Die Luftströme 12 und 13 sind voneinander getrennt, können jedoch über in mehreren Schichten innerhalb des Wärmeübertragers angeordnete Platten ihre Wärme austauschen. Über Öffnungen, die sich jeweils diagonal gegenüber liegen, können die Luftströme 12 und 13 jeweils in den Wärmeübertrager ein- und austreten.

Die dem Zuluft-Anschluss zugeordnete Öffnung des Wärmeübertragers 2 ist mittels einer Rollblende 8, die von einer Führung 11 direkt über die Öffnung geführt wird, verschließbar. Die Rollblende ist von einem hier nicht dargestellten Antrieb zu einer Rolle 9 aufwickelbar. Der Zwischenraum zwischen dem Gehäuse 1 und der Rolle 9 sowie zwischen der Trennwand 7 bzw. der Außenwand des Wärmeübertragers 2 und der Rolle 9 ist mittels einer Dichtung 10 so abgedichtet, dass an der Rolle vorbei keine Luftströmung durchströmen kann. Die Dichtung 10 kann aus einem festen oder elastischen Material bestehen. Beim Aufwickeln der Rollblende 8 zur Rolle 9 vergrößert sich der Durchmesser der Rolle 9, so dass der Außendurchmesser der Rolle 9 an der Dichtung 10 anliegt.

Erfindungsgemäß kann das erfindungsgemäße Wärmerückgewinnungsmodul auch anders aufgebaut sein, so dass sich für die Luftströmung andere Wege ergeben. Insbesondere kann das Wärmerückgewinnungsmodul auch zweiteilig aufgebaut sein, wobei der Wäreme-übertrager 2 mit den Gebläsen und Luftführungen in einem ersten Teilgehäuse und der Bypass mit der Rollblende 8 in einem am ersten Teilgehäuse angeflanschten zweiten Teilgehäuse vorgesehen sind, welches Trennwände zur Führung des Bypass-Luftstroms 14 aufweist.

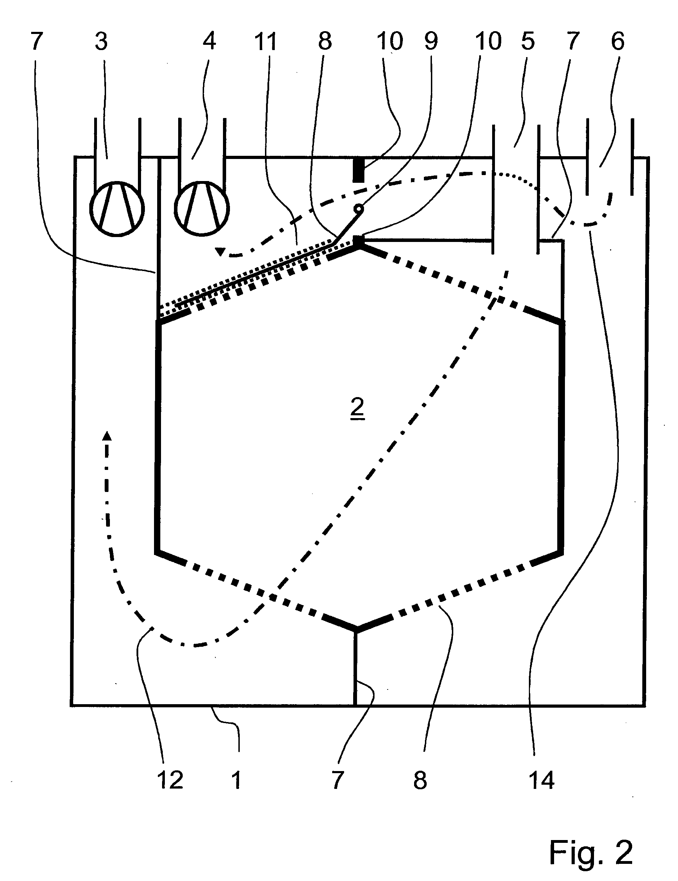

Figur 2 zeigt das selbe Wärmerückgewinnungsmodul aus Figur 1 mit geschlossener Rollblende 8. Zusätzlich zu dem in Figur 1 dargestellten Weg für den Luftstrom 13 vom Außenluft-Anschluss zum Zuluft-Anschluss wird durch das Gehäuse 1 und die Trennwand 7 ein weiterer Weg gebildet, der von dem Bypass-Luftstrom 14 durchströmt wird. Da die Rolle 9 nun abgewickelt ist, wird zwischen der Rolle 9 mit nun kleinem Durchmesser und der Dichtung 10 eine Öffnung freigegeben, durch die der Bypass-Luftstrom strömt. Da die Rollblende 8 die Öffnung des Wärmeübertragers 2 verschließt, ist der Weg für den Luftstrom 13 verschlossen.

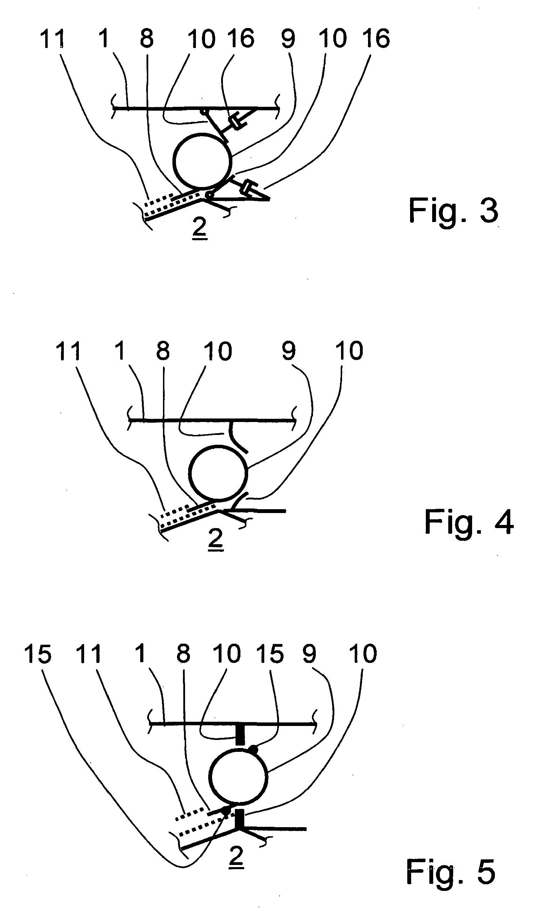

Figur 3 stellt eine Detailansicht einer alternativen Ausführung des Wärmerückgewinnungsmoduls dar. Die Dichtungen 10 aus Figur 1 und 2 sind durch bewegliche Dichtungen 10 ersetzt, die von Aktoren 16 betätigt werden. Dabei werden während des Treffens oder des Wissens der Rollblende die Dichtungen angehoben und erst bei Stillstand der Rolle wieder an die Rolle angerückt.

Figur 4 stellt eine Detailansicht einer weiteren alternativen Ausführung dar. Als Dichtungen 10 werden hier elastische Dichtlippen verwendet. Im Betrieb des Wärmerückgewinnungsmoduls wird bei geöffneter Rollblende 8 innerhalb des Wärmeübertragers 2 ein Druckabfall stattfinden, der zu einer Druckdifferenz im Bereich der Dichtungen 10 führt. Der Überdruck auf der rechten Seite der Dichtungen bewirkt, dass die Dichtungen 10 gegen die Rolle 9 angedrückt werden. Durch gezieltes An- und Abschalten des Gebläses am Zuluft-Anschluss 4 können so die Dichtungen 10 in der gewünschten Weise an die Rolle 9 angelegt werden oder abgehoben werden, während die Rolle gedreht wird.

Figur 5 stellt eine Detailansicht einer zusätzlichen alternativen Ausführung dar. Hier sind Dichtleisten 15 auf die Rollblende 8 aufgebracht. Die Dichtleisten 15 sind so positioniert, dass bei geöffneter Rollblende diese Dichtleisten 15 an der Dichtung 10 anliegen.

### Bezugszeichenliste

- 1: Gehäuse
- 2: Wärmeübertrager
- 3: Fortluft-Anschluss
- 4: Zuluft-Anschluss
- 5: Abluft-Anschluss
- 6: Außenluft-Anschluss
- 7: Trennwand
- 8: Rollblende
- 9: Rolle
- 10: Dichtung
- 11: Führung
- 12: Luftstrom Abluft zu Fortluft
- 13: Wärmeübertrager-Luftstrom Außenluft zu Zuluft
- 14: Bypass-Luftstrom Außenluft zu Zuluft
- 15: Dichtleiste
- 16: Aktor

## Patentansprüche

1. Wärmerückgewinnungsmodul, insbesondere für eine kontrollierte Wohnraumlüftung, mit Anschlüssen (3, 4, 5, 6) für zwei Luftströme (12, 13), mit einem Wärmeübertrager (2) zum Übertragen der Wärme von einem Luftstrom (12) auf den anderen Luftstrom (13), mit einem Bypass zum Führen eines Bypass-Luftstroms (14) zum Umgehen des Wärmeübertragers (2) für mindestens einen der Luftströme (12, 13) und mit mindestens einem Verschluss zum Absperren des Bypass-Luftstroms (14) und/oder des Luftstroms (12, 13) durch den Wärmeübertrager, **dadurch gekennzeichnet, dass** der Verschluss durch eine Rollblende (8) gebildet wird, die im ausgerollten Zustand den abzusperrenden Luftstrom sperrt.

2. Wärmerückgewinnungsmodul nach Anspruch 1, **dadurch gekennzeichnet, dass** als Rollblende (8) eine zumindest in einer Achse biegeweiche Folie verwendet wird.

3. Wärmerückgewinnungsmodul nach Anspruch 1, **dadurch gekennzeichnet, dass** als Rollblende (8) mehrere gelenkig miteinander verbundene Lamellen verwendet werden.

4. Wärmerückgewinnungsmodul nach einem der vorhergehenden Ansprüche, **dadurch gekennzeichnet, dass** die Rollblende (8) zu einer Rolle (9) aufrollbar ist und dass die Rolle (9) den abzusperrenden Luftstrom sperrt.

5. Wärmerückgewinnungsmodul nach Anspruch 4, **dadurch gekennzeichnet, dass** die Rollblende (8) im abgerollten Zustand den Luftstrom (13) durch den Wärmeübertrager verschließt und dass die Rolle (9) im aufgerollten Zustand der Rollblende (8) den Bypass-Luftstrom (14) verschließt.

6. Wärmerückgewinnungsmodul nach Anspruch 4 oder 5, **dadurch gekennzeichnet, dass** Dichtungen (10) vorgesehen sind, die die Rolle (9) im aufgerollten Zustand der Rollblende (8) gegenüber den umgebenden den Luftstrom führenden Bauteilen (1, 7) des Wärmerückgewinnungsmoduls abdichten.

7. Wärmerückgewinnungsmodul nach Anspruch 6, **dadurch gekennzeichnet, dass** die Dichtungen (10) und die Rolle (9) dichtend aneinander anlegbar sind.

8. Wärmerückgewinnungsmodul nach Anspruch 6 oder 7, **dadurch gekennzeichnet, dass** die Dichtungen (10) durch die bei abgesperrtem Bypass-Luftstrom (13) herrschende Druckdifferenz zwischen Außenluft-Anschluss-Seite (6) und Zuluft-Anschluss-Seite (4) an die Rolle (9) anlegbar sind.

9. Wärmerückgewinnungsmodul nach einem der Ansprüch 6 oder 7, **dadurch gekennzeichnet, dass** die Rollblende (8) Dichtleisten (15) aufweist, die im aufgerollten Zustand mit den Dichtungen (10) zusammenwirken.

10. Wärmerückgewinnungsmodul nach einem der Ansprüche 6 oder 7, **dadurch gekennzeichnet, dass** ein Aktor (16) zum Abheben der Dichtungen (10) von der Rolle (9) vorgesehen ist.

11. Wärmerückgewinnungsmodul nach einem der Ansprüche 1 bis 10, **dadurch gekennzeichnet, dass** der Wärmeübertrager (2) und die Rollblende (8) in einem gemeinsamen Gehäuse (1) vorgesehen sind.

12. Wärmerückgewinnungsmodul nach einem der Ansprüche 1 bis 10, **dadurch gekennzeichnet, dass** der Wärmeübertrager (2) in einem ersten Teilgehäuse vorgesehen ist und die Rollblende (8) in einem zweiten Teilgehäuse vorgesehen sind, wobei sich der Bypass zum Führen des Bypass-Luftstroms (14) im zweiten Teilgehäuse befindet.

## Claims

1. Heat recovery module, in particular for a controlled living space ventilation, having connectors (3, 4, 5, 6) for two air streams (12, 13), having a heat exchanger (2) to transfer the heat from one air stream (12) to the other air stream (13), having a bypass to guide a bypass air stream (14) to avoid the heat exchanger (2) for at least one of the air streams (12, 13) and having at least one stopper to block the bypass air stream (14) and/or the air stream (12, 13) through the heat exchanger, **characterised in that** the stopper is formed by a roll cover (8) which blocks the air stream to be blocked in the rolled-out state.

2. Heat recovery module according to claim 1, **characterised in that** a film which is flexible at least in one axis is used as a roll cover (8).

3. Heat recovery module according to claim 1, **characterised in that** several slats which are connected supplely to one another are used as a roll cover (8).

4. Heat recovery module according to one of the preceding claims, **characterised in that** the roll cover (8) is able to be rolled up into a roll (9) and that the roll (9) blocks the air stream to be blocked.

5. Heat recovery module according to claim 4, **characterised in that** the roll cover (8) closes the air stream (13) through the heat exchanger in the unrolled state and that the roll (9) closes the bypass air stream (14) in the rolled-up state of the roll cover (8).

6. Heat recovery module according to claim 4 or 5, **characterised in that** seals (10) are provided which seal the roll (9) in the rolled-up state of the roll cover (8) from the surrounding components (1, 7) of the heat recovery module which guide the air stream.

7. Heat recovery module according to claim 6, **characterised in that**, the seals (1) and the roll (9) are able to be applied to each other in a sealing manner.

8. Heat recovery module according to claim 6 or 7, **characterised in that** the seals (10) are able to be applied to the roll (9) due to the difference in pressure between the outside air connector side (6) and the supply air connector side (4) which prevails in the case of a blocked bypass air stream (13).

9. Heat recovery module according to one of claims 6 or 7, **characterised in that** the roll cover (8) has sealing strips (15) which interact with the seals (10) in the rolled-up state.

10. Heat recovery module according to one of claims 6 or 7, **characterised in that** an actuator (16) is provided to lift the seals (10) from the roll (9).

11. Heat recovery module according to one of claims 1 to 10, **characterised in that** the heat exchanger (2) and the roll cover (8) are provided in a mutual housing (1).

12. Heat recovery module according to one of claims 1 to 10, **characterised in that** the heat exchanger (2) is provided in a first part housing and the roll cover (8) is provided in a second part housing, wherein the bypass to guide the bypass air stream (14) is located in the second part housing.

## Revendications

1. Module de récupération de chaleur, plus particulièrement pour une aération contrôlée des pièces d'habitation, équipé de raccords (3, 4, 5, 6) pour deux flux d'air (12, 13), avec un échangeur de chaleur (2) destiné à échanger la chaleur d'un flux d'air (12) avec un autre flux d'air (13), avec une dérivation destinée à conduire un flux d'air de dérivation (14) afin de contourner l'échangeur de chaleur (2) pour au moins un des deux flux d'air (12, 13) et avec au moins une fermeture destinée à fermer le flux d'air de dérivation (14) et/ou le flux d'air (12, 13) qui traverse l'échangeur de chaleur, **caractérisé en ce que** la fermeture est formée d'un écran roulant (8) qui, lorsqu'il est déroulé, bloque le flux d'air à bloquer.

2. Module de récupération de chaleur selon la revendication 1, **caractérisé en ce qu'**une feuille flexible est utilisée dans au moins un axe comme écran roulant (8).

3. Module de récupération de chaleur selon la revendication 1, **caractérisé en ce que** plusieurs lamelles articulées reliées les unes aux autres sont utilisées comme écran roulant (8).

4. Module de récupération de chaleur selon l'une quelconque des revendications précédentes, **caractérisé en ce que** l'écran roulant (8) est enroulable autour d'un rouleau (9) et **en ce que** le rouleau (9) bloque le flux d'air à bloquer.

5. Module de récupération de chaleur selon la revendication 4, **caractérisé en ce que** l'écran roulant (8), lorsqu'il est déroulé, bloque le flux d'air (13) à travers l'échangeur de chaleur et **en ce que** le rouleau (9), lorsque l'écran roulant (8) est enroulé, bloque le flux d'air de dérivation (14).

6. Module de récupération de chaleur selon la revendication 4 ou 5, **caractérisé en ce que** des joints (10) sont prévus, lesquels rendent étanche le rouleau (9) lorsque l'écran roulant (8) est enroulé en face des composants (1, 7) environnant du module de récupération de chaleur qui conduisent le flux d'air.

7. Module de récupération de chaleur selon la revendication 6, **caractérisé en ce que** les joints (10) et le rouleau (9) peuvent être placés de façon étanche les uns contre les autres.

8. Module de récupération de chaleur selon la revendication 6 ou 7, **caractérisé en ce que** les joints (10) peuvent être appliqués au niveau du rouleau (9) entre le côté de raccordement de l'air extérieur (6) et le côté de raccordement de l'arrivée (4) par la différence de pression exercée lorsque le flux d'air de dérivation(13) est bloqué.

9. Module de récupération de chaleur selon l'une quelconque des revendications 6 ou 7, **caractérisé en ce que** l'écran roulant (8) comporte des rebords étanches (15) qui agissent conjointement avec les joints (10) lorsque l'écran roulant est enroulé.

10. Module de récupération de chaleur selon l'une quelconque des revendications 6 ou 7, **caractérisé en ce qu'**un actionneur (16) est prévu pour soulever les joints (10) du rouleau (9).

11. Module de récupération de chaleur selon l'une quelconque des revendications 1 à 10, **caractérisé en ce que** l'échangeur de chaleur (2) et l'écran roulant (8) sont prévus dans un boîtier commun (1).

12. Module de récupération de chaleur selon l'une quelconque des revendications 1 à 10, **caractérisé en ce que** l'échangeur de chaleur (2) est prévu dans une première partie de boîtier et **en ce que** l'écran roulant (8) est prévu dans une seconde partie de boîtier, la dérivation destinée à conduire le flux d'air de dérivation (14) se trouvant dans la seconde partie de boîtier.
